# EUROPEAN PATENT SPECIFICATION

(11) **EP 2 948 296 B1**
(45) Date of publication and mention of the grant of the patent: **26.05.2021**
(21) Application number: 14703245.2
(22) Date of filing: 27.01.2014
(51) Int. Cl.: B29C 73/16

(54) **APPARATUS FOR DISPENSING TIRE SEALANT**
VORRICHTUNG ZUR ABGABE EINES REIFENDICHTMITTELS
APPAREIL POUR DISTRIBUER UN PRODUIT ANTIFUITE POUR PNEUMATIQUE

(30) Priority: 25.01.2013 DE 102013100738; 15.03.2013 US 201313837857; 24.01.2014 DE 102014100815
(43) Date of publication of application: 02.12.2015
(60) Divisional application: 16169941.8
(73) Proprietor: Illinois Tool Works Inc., Glenview, IL 60025 (US)
(72) Inventor: SPINDLER, Martin Patrick, DE-88634 Herdwangen-Schönach (DE); HUTTEN, Byron Peter, DE-88696 Owingen (DE); KLEMM, Henry Friedrich Ferdinand, Glenview, Illinois 60025 (US); PFEIFER, Volker, DE-78354 Sipplingen (DE)
(74) Representative: Trinks, Ole
(86) International application number: PCT/US2014/013221
(87) International publication number: WO 2014/117098

(56) References cited:
- EP-A1- 1 894 707
- EP-A1- 2 261 011
- EP-A1- 2 305 570
- DE-A1-102008 033 477
- DE-A1-102008 057 827
- DE-U1-202009 002 661
- US-A1- 2003 056 851
- US-A1- 2008 098 855

## Description

The invention relates to an apparatus for dispensing tire sealant from a container by means of a pressure source, wherein the pressure source and the container are situated in a housing.

### Prior art

Apparatuses of this kind are known and can be obtained commercially in many different forms and embodiments. They are used primarily for introducing tire sealant into defective tires in the event of punctures and for sealing a defective tire. In this case, compressed air is forced by means of a compressor into a container containing tire sealant, and the tire sealant is then pumped into the defective tire via a valve by means of appropriate riser tubes. The valve can then be switched over, allowing the tire then to be pumped up by means of the compressor. Standard functions in the prior art are such that either only air is pumped, in order to pump up balls or air mattresses, or to carry out air pressure monitoring. In the repair function, the prior art is designed in such a way that the introduction of sealant and the air takes place in a single operation. Apparatuses of this kind are known from DE 20 2005 017 071 U1 or DE 20 2009 002 661 U1, for example
EP 2 261 011 A1 discloses the preamble of claim 1.

### Object

It is the object of the present invention to make an apparatus of this kind more compact and to facilitate the assembly and handling thereof.

### Achievement of the object

This object is achieved by the features of claim 1.

This first feature of the present invention makes it possible to use the apparatus many times. Having been used once, it can only be replaced according to the previously known prior art by an entirely new apparatus together with a pressure source etc. However, the present invention makes it possible to exchange the container in the housing without tools and thus to use the actual apparatus many times. Consequently, exchange and reuse is possible, something that is not possible, however, in the prior art since there it is not possible to exchange the sealant bottle without tools. Since, according to the invention, the container is now exchanged, it is envisaged that only this part of the apparatus will be made capable of being opened. This means that the part of the apparatus which contains the pressure source will preferably remain closed. The pressure source has a connection piece which extends into the space containing the container, thus allowing a container to be connected to a nipple associated with the latter by means of the connection piece. This is accomplished in such a way that the connection piece and the nipple enter into a sealed connection, ensuring that there is no leakage between the connection piece and the nipple. Of course, this arrangement can also be reversed, i.e. there can be a nipple projecting from the pressure source and engaging in a connection piece on the container.

The nipple is part of a valve by means of which it is possible to switch backward and forward between different functional states of the apparatus. In a first functional state, the compressed air source is cut off from the container, ensuring that no compressed air enters the container or passes to the outside through a hose. In a second functional state of the valve, the pressure source is connected directly to a hose, which leads, for example, to a vehicle tire or to some other object to be pumped up, e.g. an air mattress or the like. A third functional state is present when the valve is connecting the pressure source to the container, thus allowing the sealant to be forced out of the container through a hose into a vehicle tire, for example. This takes place especially when the intention is to seal off the vehicle tire.

To ensure that the overall size of the apparatus as a whole can be kept as small as possible, the container should also be fully integrated into the housing. However, this integration prevents the container from being pushed into a corresponding space in the housing from the side, for example, to connect the nipple and the connection piece. According to the invention, therefore, provision is made to position the container obliquely in such a way that it can be inserted into the space provided for it in the housing and then the nipple can be pushed into the connection piece. Once the nipple has been connected to the connection piece, the container is then pivoted into the space provided for it and can thus assume its rest position.

The housing preferably has a holding shell, which serves to accommodate the container and the pressure source. These two are preferably likewise separated from one another by a wall, thereby ensuring that the space in which the pressure source is situated can remain closed, while the space in which the container is situated can be opened. In the abovementioned partition wall there is a recess through which the connection piece extends into the space containing the container.

The container and the pressure source should be encircled by an inner wall. The two spaces for the pressure source and the container are thus formed.

According to the invention, provision is now made additionally to arrange an outer wall, wherein a receiving trough is formed between the inner wall and the outer wall. This receiving trough can serve to accommodate further functional elements of the apparatus according to the invention, in particular a connection cable or a feed hose for tire sealant or, alternatively, an electric connection. In this arrangement, the outer wall can be of closed design but can also have openings, e.g. windows, to make further information on the bottle visible.

As mentioned above, a cover for the holding shell should preferably consist of at least two parts, wherein a covering part over the pressure source is anchored securely to the holding shell. The other covering part over the container preferably enters into clip joints with the holding shell, thus allowing it to be released from the holding shell. This covering part preferably also has an opening or aperture through which it is possible to see the container. Thus, it is possible not only to check the contents of the container but also to read a marking of any kind on the container.

Another part of the present invention, for which also separate protection is desired, relates to the pressure source. It is preferably designed as a compressed air source, i.e. as a compressor. This compressor consists of three parts, namely a motor with a fan impeller, a transmission component and a pressure buildup element. According to the invention, however, all the elements of this pressure source are arranged in a linear manner, i.e. the movement of an output shaft of the motor is transferred in a linear manner to the pressure buildup element. No angular offsetting of an element occurs. The pressure source as a whole is thereby kept very shallow, leading in turn to a reduction in the installation space. A compressor of this kind can, of course, likewise be used in a large number of other tire sealant sets.

To ensure that a linear transmission is formed, there is a bevel gear between the motor and the pressure buildup element, into the teeth of which gear a bevel pinion engages. This bevel pinion is mounted on the output shaft of the motor, wherein the abovementioned fan impeller is situated opposite the bevel pinion on the output shaft.

The bevel gear, in turn, is connected eccentrically to a connecting rod of the pressure buildup element, wherein the connecting rod drives a piston in the pressure buildup element in a known manner to produce a pressure. This connecting rod is arranged axially parallel with the output shaft of the motor. The linear configuration of the pressure source as a whole is thereby formed.

Another special feature of the invention is to be regarded as the provision of a transmission pod. This transmission pod connects the motor and the pressure buildup element to one another and contains the bevel gear, the bevel pinion and the connecting rod. It is preferably open toward the pressure buildup element and has lateral grooves, allowing the pressure buildup element to be connected to the transmission pod in a simple manner by inserting an end plate provided on the pressure buildup element into the groove. The pressure buildup element is thereby fixed relative to the transmission, thus ensuring that the pressure buildup element is not pushed out or pulled in relative to the transmission during the operation of the connecting rod.

The motor reaches into the transmission pod with the output shaft from the other side, wherein the bevel pinion is mounted on the output shaft within the transmission pod.

This transmission pod can be a separate part but is preferably molded onto the holding shell within the interior of the latter during the production of the holding shell itself.

For the operation of such an apparatus according to the invention, for the operation of the compressed air source/of the compressor, it is generally necessary to provide an electrical connection having a plug connector for connecting for example to a cigarette lighter, and a valve connection for connecting to a defective tire. According to the present invention, it is the intention for at least one of the two connections to be arranged in the surface of the housing so as to be clearly visible and easy for a user to handle. In this case, it is also provided that the corresponding connecting lines, that is to say on the one hand a cable between the plug connector and compressor and on the other hand the hose between the valve connection and container, are laid in corresponding ducts or channels that are formed into the housing.

To make the plug connector and valve connection easier to handle, it should additionally be provided that these are designed to be elastically variable in length, such that they are held in a clamped manner in the recesses after being inserted. Removal is also facilitated in this way.

### Description of the figures

Further advantages, features and details of the invention will become apparent from the following description of preferred illustrative embodiments and from the drawing, in which
**Figure 1** shows a perspective view of an apparatus according to the invention for dispensing tire sealant;
**Figure 2** shows a plan view of the opened apparatus in accordance with figure 1;
**Figure 3** shows a perspective view of the opened apparatus in accordance with figure 2 during the insertion of a container;
**Figure 4** shows a perspective view of a holding shell as part of a housing of the apparatus in accordance with figure 1;
**Figure 5** shows a perspective view of one part of a cover;
**Figure 6** shows a perspective view of another part of a cover as part of the housing of the apparatus in accordance with figure 1;
**Figure 7** shows a perspective view of a pressure source according to the invention;
**Figure 8** shows a partial view of the apparatus in accordance with figure 1 shortly before the joining of the container valve and the connection piece to the pressure source;
**Figure 9** shows a partial view of the apparatus in accordance with figure 1 in the joined state of the container valve and the pressure source;
**Figure 10** shows a plan view of a further exemplary embodiment of an apparatus according to the invention for dispensing tire sealant.

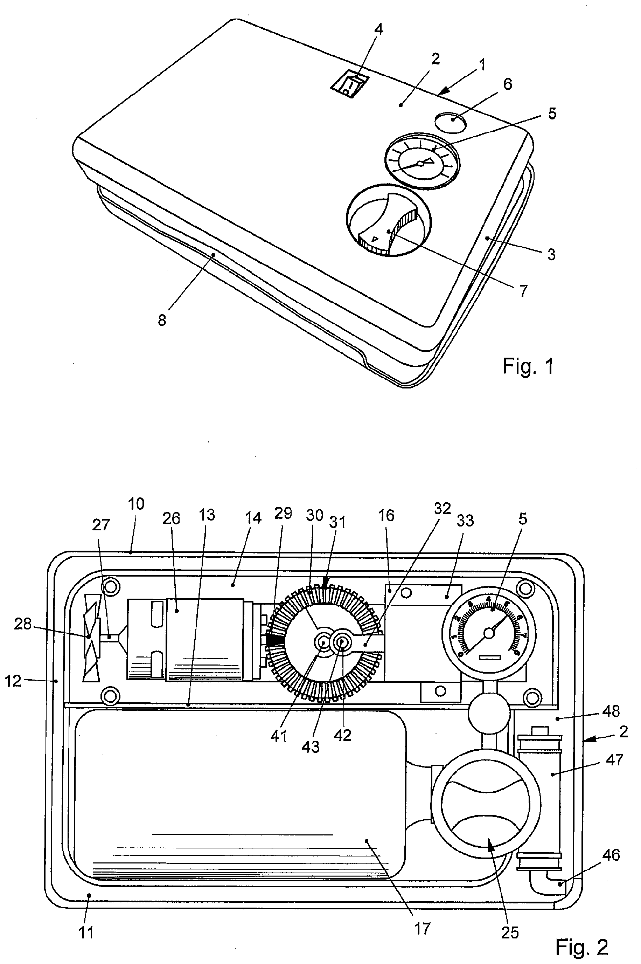

According to figure 1, an apparatus according to the invention for dispensing tire sealants has a housing 1. This consists essentially of a holding shell 2 and a cover 3. Functional elements are provided in corresponding openings in the holding shell 2. These are, on the one hand, a button 4 for switching the apparatus on and off, a manometer 5 for measuring the pressure built up by a pressure source (described below), a pressure release button 6 for releasing an excess pressure and a rotary knob 7 for actuating a valve (described below).

Provided between the holding shell 2 and the cover 3 is an encircling slot 8, into which a cable for operating the apparatus and, if appropriate, also a hose for dispensing a tire sealant can be inserted. A similar configuration is described in DE 20 2009 002 661.

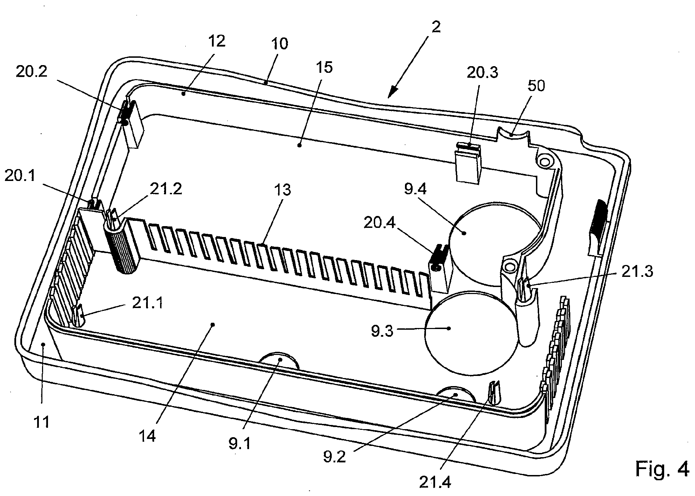

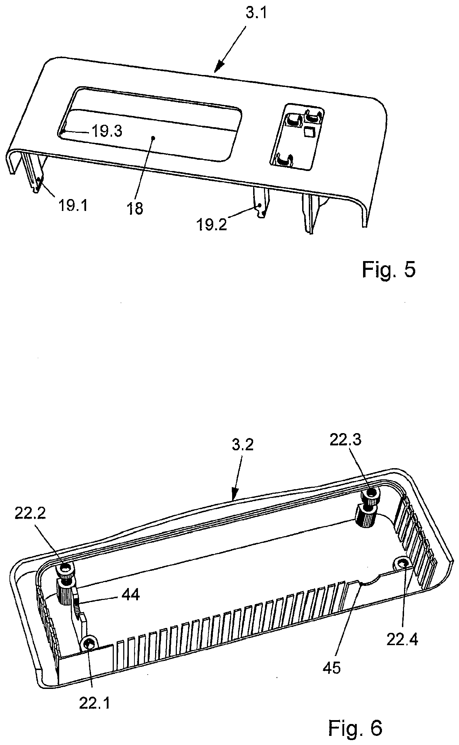

Apart from the corresponding openings 9.1 to 9.4 for button 4, manometer 5, pressure release button 6 and rotary knob 7, the holding shell 2 has, according to figure 4, an approximately encircling outer wall 10 of partially undulating design which at least partially encircles an inner wall 12, forming a trough 11. Two spaces 14 and 15 are formed by a partition wall 13 within the space surrounded by the inner wall 12, said spaces serving to accommodate a compressed air source 16 (shown in figure 1) or a tire sealant container 17. The holding shell 2 is then assigned the cover 3, which, according to figure 5, serves of a covering part 3.1 for the container and, according to figure 6, of a covering part 3.2 for the compressed air source 16. Here, covering part 3.1 has a large opening 18, through which it is possible to see the inserted container 17. In particular, it is possible in doing so to recognize corresponding technical data, including, of course, the expiry date.

Moreover, clip feet 19.1 to 19.3 project inward from the cover 3.1 in the interior, interacting with corresponding clip receptacles 20.1 to 20.4 in the holding shell 2 (see figure 4). The clip feet 19 and clip receptacles 20 are designed with a flexibility such that the cover 3.1 can be removed and placed on again. This serves especially for the exchange of the container 17.

To fix the covering part 3.2 in accordance with figure 6, undercut tongues 21.1 to 21.4 project from corresponding pillars in space 14, interacting in the position of use with lugs 22.1 to 22.4 formed on covering part 3.2. If these undercut tongues 21.1 to 21.4 are inserted into the lugs 22.2 to 22.4, they then engage behind the lugs and do not allow opening without being destroyed. Of course, however, they can also be designed with a flexibility such that they allow reopening and, in this case, it is sufficient, for example, if the undercut is designed as a bevel.

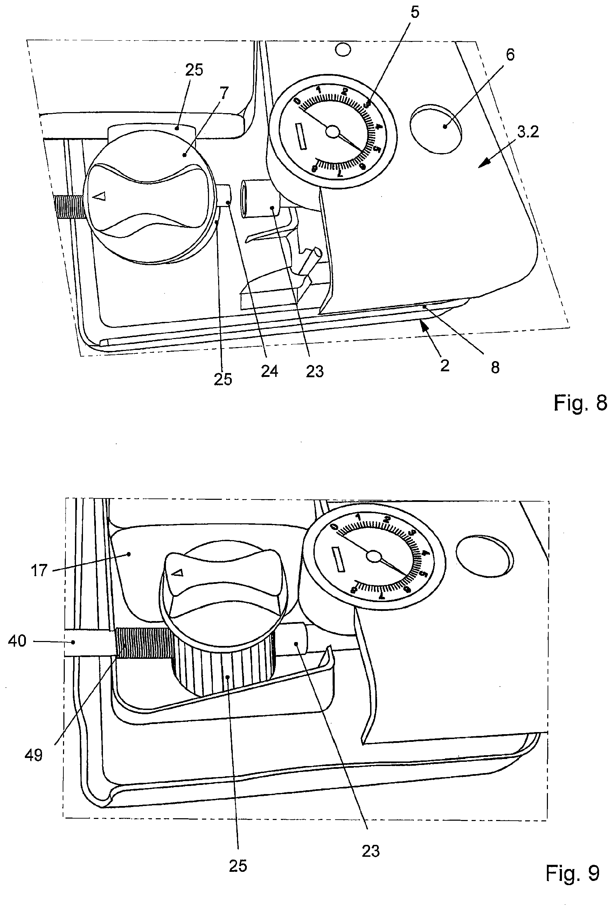

According to the invention, the container 17 and the compressed air source 16 are connected releasably to one another. For this purpose, a connection piece 23 projects from the compressed air source 16 in accordance with figures 8 and 9, into which connection piece a nipple 24 with a sealing ring 25 can be inserted. However, it is also possible here for a plurality of sealing rings to be inserted. This nipple 24 belongs to a rotary valve 25, which can be actuated by the rotary knob 7. A rotary valve of this kind is described in DE 101 06 468, for example, which is incorporated here expressly by reference.

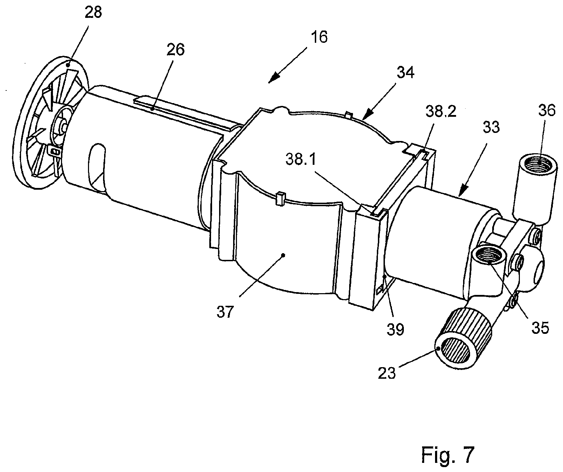

In the present case, the compressed air source 16 is preferably designed as a compressor. According to figures 1 and 7, it has a motor 26, the output shaft 27 of which drives a fan impeller 28 at one end. At the other end, a bevel pinion 29 is mounted on the output shaft 27, engaging in teeth 30 of a bevel gear 31. Connected eccentrically to said bevel gear 31 is a connecting rod 32, which drives a piston (not shown specifically) in a pressure buildup element 33.

An illustrative embodiment of a compressed air source 16 according to the invention in the assembled state is shown in figure 7. The motor 26 with the fan impeller 28, a transmission 34, in which, in particular, the bevel gear 31 rotates, being acted upon, on the one hand, by the bevel pinion 29 and, on the other hand, by the connecting rod 32, and the pressure buildup element 33, to which the connection piece 23 is connected, are visible. Connection 35 to the manometer and connection 36 to the pressure release button 6 are furthermore indicated.

A significant feature in the present invention is that a transmission pod 37 is provided for assembly. This can be produced separately or, alternatively, can be an integral part of the holding shell 2. It largely surrounds the transmission 34 but is open at the front toward the pressure buildup element 33 and there has two mutually facing vertical grooves 38.1 and 38.2, into which an end plate 39 is inserted, which is part of the pressure buildup element 33.

The assembly, in accordance with the invention, of the apparatus for dispensing tire sealant is accomplished as follows:
The rotary valve 25 is mounted on the container 17 for tire sealant in advance, and it may also be the case that a hose 40 (shown in figure 9) for dispensing the tire sealant or for transferring air into a vehicle tire, for example, is connected thereto.

The compressed air source 16 is likewise assembled in advance, although, if the transmission pod 37 is an integral part of the holding shell 2, this can also be carried out only during installation of the compressed air source 16 in the holding shell. Here, the bevel gear 31 is inserted first into the transmission pod 37. This bevel gear 31 rotates about a spindle 41, which projects upward from a base of the transmission pod 37. After this, the output shaft 27 is inserted into the transmission part 34 from the closed side of the transmission pod, with the result that it projects into the interior of the transmission pod 37. The bevel pinion 29 is then mounted on this part of the output shaft 27 in such a way that it engages in the teeth 30 of the bevel gear 31. The motor 26 together with the fan impeller 28 is thus fixed on the transmission pod 37. The pressure buildup element 33 is inserted with its end plate 39 into the two vertical grooves 38.1 and 38.2, wherein the connecting rod 32 is pushed onto an eccentric pin 43 rotating eccentrically around the spindle 41 by means of a connecting rod eye 42. The compressed air source 16 is thus ready for operation and can be inserted into the holding shell 2. The space 14 which has received the compressed air source 16 is then covered by covering part 3.2, wherein a forked strip 44 engages behind the compressed air source 16 between the motor 26 and the fan impeller 28. This ensures that the compressed air source 16 does not move backward and forward within space 14. This purpose is also served by the abovementioned recess accommodating the connection piece 23 in the partition wall 13. The counterpart to this recess is indicated by the reference number 45 in the covering part 3.2 in figure 6.

By means of the above-described interplay between the undercut tongues 21.1 to 21.4 and the lugs 22.1 to 22.4, the space 14 containing the compressed air source 16 is closed and preferably can only be opened by force.

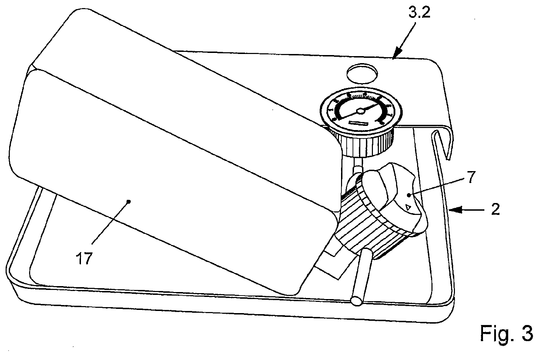

The container 17 together with the rotary valve 25 is then inserted into the space 15 of the holding shell 2. For this purpose, the container 17 must admittedly first be tilted, as shown in figure 3, since otherwise it cannot get past either the outer wall 10 or the inner wall 12. In this tilted state, the nipple 24 is then inserted into the connection piece 23, and the container 17 is pivoted into its rest position, shown in figure 2. In this rest position, the container 17 is accommodated in space 15.

For operation of the compressed air source, connection to a power source, e.g. a cigarette lighter, is necessary. A cable 46 for this purpose is preferably laid in the trough 11, while an electric connection 47 is accommodated in a space 48 above the rotary valve 25.

Space 15 can then also be closed by covering part 3.1, in which the clip feet 19.1 to 19.3 are inserted into the clip receptacles 20.1 to 20.4. If electric connection of the apparatus is desired, or exchange of the container 17, it is sufficient to open said covering part 3.1 and to remove the electric connection 47 or to remove the container 17 in a manner opposite to that described above and replace it with a new container.

Consideration is also given to laying the hose 40 in the trough 11, wherein a wire helix 49 shown in figure 9 in interaction with corresponding trough strips 50 (see figure 4) ensures that the hose 40 cannot be pulled off the rotary valve 25 accidentally. The corresponding counterpart to the trough 11 in covering part 3.1 is not shown.

If there is a requirement that the apparatus as a whole should remain closed, it is, of course, also possible to find space in the trough 11 to accommodate the electric connection 27. In this case, it is not necessary to open covering part 3.1.

The rotary valve has two or three preferred positions. In one position, the compressed air source 16 is closed, and, in a second position, the compressed air source is connected directly to the hose 40 by the connection piece 23 and the corresponding nipple 24, allowing compressed air to be introduced directly into a tire. In a third position, the compressed air source is connected to the interior of the container 17, allowing tire sealant to be introduced through a bypass into the hose 40 and, from the latter, into the tire.

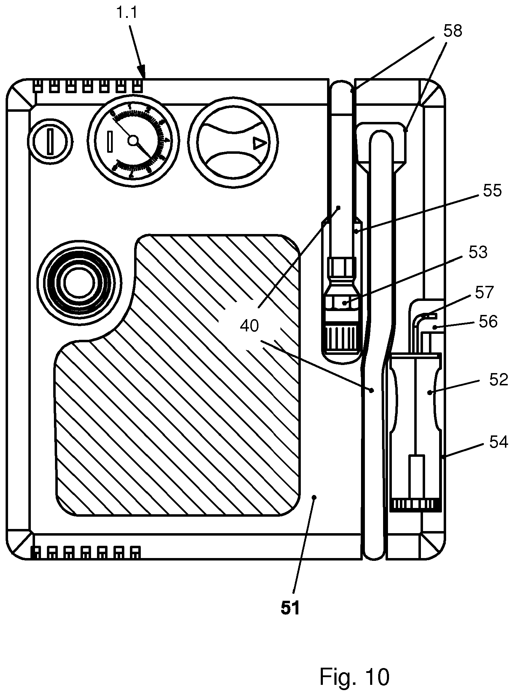

Figure 10 shows a further exemplary embodiment of a housing 1.1 of an apparatus for dispensing tire sealant. In the case of said housing 1.1, recesses are formed into the surface 51 thereof, which recesses serve for the fixing of a plug connector 52 and/or of a valve connection 53 for connecting to a tire. Both the plug connector 52 and the valve connection 53 may be designed to be elastically variable in length such that they are held clamped in the corresponding recess 54 and 55 of the surface 51.

The recess 54 is adjoined by a duct 56 for a cable 57 that connects the plug connector 52 to the compressed air source 16/the compressor. In this way, said compressed air source/compressor is supplied with the electrical current required for its operation.

The recess 55 is adjoined by a channel 58 into which the hose 40 is laid, wherein the hose 40 connects the valve connection 53 to the container 17. In the exemplary embodiment shown, the channel 58 runs once around the entire housing 1.1.

By means of this arrangement, it is ensured that a user can, without further auxiliary aids, identify what connections he must make in order to operate the apparatus, and therefore the operation of the apparatus as a whole is greatly simplified.

**List of reference signs**

| | | | |
|---|---|---|---|
| 1 | housing | 33 | pressure buildup element |
| 2 | housing shell | 34 | transmission |
| 3 | cover | 35 | connection |
| 4 | button | 36 | connection |
| 5 | manometer | 37 | transmission pod |
| 6 | pressure release button | 38 | groove |
| 7 | rotary knob | 39 | end plate |
| 8 | slot | 40 | hose |
| 9 | openings | 41 | spindle |
| 10 | outer wall | 42 | connecting rod eye |
| 11 | trough | 43 | eccentric pin |
| 12 | inner wall | 44 | forked strip |
| 13 | partition wall | 45 | counterpart |
| 14 | space | 46 | cable |
| 15 | space | 47 | connection |
| 16 | compressed air source | 48 | space |
| 17 | container | 49 | wire helix |
| 18 | opening | 50 | trough strip |
| 19 | clip feet | 51 | surface |
| 20 | clip receptacle | 52 | plug connector |
| 21 | tongue | 53 | valve connection |
| 22 | lugs | 54 | recess |
| 23 | connection piece | 55 | recess |
| 24 | nipple | 56 | duct |
| 25 | rotary valve | 57 | cable |
| 26 | motor | 58 | channel |
| 27 | output shaft | | |
| 28 | fan impeller | | |
| 29 | bevel pinion | | |
| 30 | teeth | | |
| 31 | bevel gear | | |
| 32 | connecting rod | | |

## Claims

1. An apparatus for dispensing tire sealant from a container (17) by means of a pressure source (16),
wherein the pressure source (16) and the container (17) are situated in a housing (1, 1.1),
wherein the container (17) is connected exchangeably to the pressure source (16) in the housing (1, 1.1),
**characterized in that**
the pressure source (16) has a connection piece (23), into which a nipple (24) associated with the container (17) engages in a sealing manner, or vice versa, wherein the nipple (24) is provided on a valve (25), which is mounted on the container (17), and wherein the container (17) together with the valve (25) and the nipple (24) is connected exchangeably to the pressure source (16) in the housing (1, 1.1) via the connection piece (23).

2. The apparatus as claimed in claim 1,
**characterized in that**
the valve (25) is a rotary valve, switch or a tipping valve.

3. The apparatus as claimed in at least one of the preceding claims,
**characterized in that**
the container (17) can be connected positively to the pressure source (16).

4. The apparatus as claimed in at least one of the preceding claims,
**characterized in that**
the housing (1) has a holding shell (2), which serves to accommodate the container (17) and the pressure source (16).

5. The apparatus as claimed in claim 4,
**characterized in that**
the container (17) and the pressure source (16) are separated in the holding shell (2) by a wall (13).

6. The apparatus as claimed in claim 5,
**characterized in that**
the connection piece (23) projecting from the pressure source (16) is situated in a recess (45) in the wall (13).

7. The apparatus as claimed in at least one of the preceding claims,
**characterized in that**
the holding shell (2) has an inner wall (12) which at least partially encircles the container (17) and the pressure source (16).

8. The apparatus as claimed in claim 7,
**characterized in that**
the inner wall (12) is surrounded at least partially by an outer wall (10) to form a receiving trough (11).

9. The apparatus as claimed in at least one of the preceding claims,
**characterized in that**
the holding shell (2) is covered by a cover (3).

10. The apparatus as claimed in claim 9,
**characterized in that**
the cover (3) is divided into two parts.

11. The apparatus as claimed in claim 10,
**characterized in that**
one part (3.1) of the cover covers the pressure source (16), and the other part (3.2) covers the container (17).

12. The apparatus as claimed in claim 10 or 11,
**characterized in that**
the cover (3) or the covering parts (3.1, 3.2) enter into clip joints (19.1-19.3, 20.1-20.4) with the holding shell (2).

13. The apparatus as claimed in claim 11 or 12,
**characterized in that**
the covering part (3.1) associated with the container (17) has an aperture (18) above the container (17).

14. The apparatus as claimed in at least one of the preceding claims,
**characterized in that**
a slot (8), into which a hose (40) for dispensing a tire sealant and/or a cable (46) for operating the pressure source (16) is inserted, is provided in the housing (1), preferably between the holding shell (2) and the cover (3).

15. The apparatus as claimed in at least one of the preceding claims,
**characterized in that**
the holding shell (2) has a compartment (48) for accommodating an electric connection element (47).

## Patentansprüche

1. Vorrichtung zum Abgeben eines Reifendichtmittels aus einem Behälter (17) mittels einer Druckquelle (16),
wobei die Druckquelle (16) und der Behälter (17) in einem Gehäuse (1, 1.1) angeordnet sind,
wobei der Behälter (17) austauschbar mit der Druckquelle (16) in dem Gehäuse (1, 1.1) verbunden ist,
**dadurch gekennzeichnet, dass**
die Druckquelle (16) ein Verbindungsstück (23) aufweist, in das ein Nippel (24), der dem Behälter (17) zugeordnet ist, auf eine dichtende Weise eingreift, oder vice versa, wobei der Nippel (24) auf einem Ventil (25) bereitgestellt ist, das auf dem Behälter (17) befestigt ist, und wobei der Behälter (17) zusammen mit dem Ventil (25) und dem Nippel (24) über das Verbindungsstück (23) austauschbar mit der Druckquelle (16) in dem Gehäuse (1, 1.1) verbunden ist.

2. Vorrichtung nach Anspruch 1,
**dadurch gekennzeichnet, dass**
das Ventil (25) ein Drehventil, ein Schaltventil oder ein Kippventil ist.

3. Vorrichtung nach mindestens einem der vorhergehenden Ansprüche,
**dadurch gekennzeichnet, dass**
der Behälter (17) positiv mit der Druckquelle (16) verbunden werden kann.

4. Vorrichtung nach mindestens einem der vorhergehenden Ansprüche,
**dadurch gekennzeichnet, dass**
das Gehäuse (1) einen Haltemantel (2) aufweist, der dazu dient, den Behälter (17) und die Druckquelle (16) aufzunehmen.

5. Vorrichtung nach Anspruch 4,
**dadurch gekennzeichnet, dass**
der Behälter (17) und die Druckquelle (16) in dem Haltemantel (2) durch eine Wand (13) separiert sind.

6. Vorrichtung nach Anspruch 5,
**dadurch gekennzeichnet, dass**
das Verbindungsstück (23), das aus der Druckquelle (16) vorsteht, in einer Vertiefung (45) in der Wand (13) angeordnet ist.

7. Vorrichtung nach mindestens einem der vorhergehenden Ansprüche,
**dadurch gekennzeichnet, dass**
der Haltemantel (2) eine Innenwand (12) aufweist, die den Behälter (17) und die Druckquelle (16) mindestens teilweise umschließt.

8. Vorrichtung nach Anspruch 7,
**dadurch gekennzeichnet, dass**
die Innenwand (12) mindestens teilweise durch eine Außenwand (10) umgeben ist, um eine Aufnahmemulde (11) auszubilden.

9. Vorrichtung nach mindestens einem der vorhergehenden Ansprüche,
**dadurch gekennzeichnet, dass**
der Haltemantel (2) durch eine Abdeckung (3) abgedeckt ist.

10. Vorrichtung nach Anspruch 9,
**dadurch gekennzeichnet, dass**
die Abdeckung (3) in zwei Teile aufgeteilt ist.

11. Vorrichtung nach Anspruch 10,
**dadurch gekennzeichnet, dass**
ein Teil (3.1) der Abdeckung die Druckquelle (16) abdeckt und der andere Teil (3.2) den Behälter (17) abdeckt.

12. Vorrichtung nach Anspruch 10 oder 11,
**dadurch gekennzeichnet, dass**
die Abdeckung (3) oder die Abdeckungsteile (3.1, 3.2) in Klemmverbindungen (19.1-19.3, 20.1-20.4) mit dem Haltemantel (2) eindringen.

13. Vorrichtung nach Anspruch 11 oder 12,
**dadurch gekennzeichnet, dass**
der Abdeckungsteil (3.1), der dem Behälter (17) zugeordnet ist, eine Öffnung (18) über dem Behälter (17) aufweist.

14. Vorrichtung nach mindestens einem der vorhergehenden Ansprüche,
**dadurch gekennzeichnet, dass**
ein Schlitz (8), in den ein Schlauch (40) zum Abgeben eines Reifendichtmittels und/oder ein Kabel (46) zum Betreiben der Druckquelle (16) eingeführt ist, in dem Gehäuse (1), vorzugsweise zwischen dem Haltemantel (2) und der Abdeckung (3), bereitgestellt ist.

15. Vorrichtung nach mindestens einem der vorhergehenden Ansprüche,
**dadurch gekennzeichnet, dass**
der Haltemantel (2) eine Kammer (48) zum Aufnehmen eines elektrischen Anschlusselements (47) aufweist.

## Revendications

1. Appareil pour distribuer un produit d'étanchéité pour pneu à partir d'un contenant (17) au moyen d'une source de pression (16),
dans lequel la source de pression (16) et le contenant (17) sont situés dans un logement (1, 1.1),
dans lequel le contenant (17) est raccordé de façon échangeable à la source de pression (16) dans le logement (1, 1.1),
**caractérisé en ce que**
la source de pression (16) a une pièce de raccordement (23), dans laquelle un mamelon (24) associé au contenant (17) s'engage de manière étanche, ou vice versa, dans lequel le mamelon (24) est prévu sur une valve (25), qui est montée sur le contenant (17), et dans lequel le contenant (17), conjointement avec la valve (25) et le mamelon (24), est raccordé de façon échangeable à la source de pression (16) dans le logement (1, 1.1) par l'intermédiaire de la pièce de raccordement (23).

2. Appareil selon la revendication 1,
**caractérisé en ce que**
la valve (25) est une valve rotative, un interrupteur ou une valve basculante.

3. Appareil selon au moins l'une des revendications précédentes,
**caractérisé en ce que**
le contenant (17) peut être raccordé positivement à la source de pression (16).

4. Appareil selon au moins l'une des revendications précédentes,
**caractérisé en ce que**
le logement (1) a une enveloppe enceinte (2), qui sert à loger le contenant (17) et la source de pression (16).

5. Appareil selon la revendication 4,
**caractérisé en ce que**
le contenant (17) et la source de pression (16) sont séparés dans l'enveloppe enceinte (2) par une paroi (13) .

6. Appareil selon la revendication 5,
**caractérisé en ce que**
la pièce de raccordement (23) faisant saillie à partir de la source de pression (16) est située dans un évidement (45) dans la paroi (13).

7. Appareil selon au moins l'une des revendications précédentes,
**caractérisé en ce que**
l'enveloppe enceinte (2) a une paroi intérieure (12) qui encercle au moins partiellement le contenant (17) et la source de pression (16).

8. Appareil selon la revendication 7,
**caractérisé en ce que**
la paroi intérieure (12) est entourée au moins partiellement par une paroi extérieure (10) pour former un creux de réception (11).

9. Appareil selon au moins l'une des revendications précédentes,
**caractérisé en ce que**
l'enveloppe enceinte (2) est couverte par un couvercle (3).

10. Appareil selon la revendication 9,
**caractérisé en ce que**
le couvercle (3) est divisé en deux parties.

11. Appareil selon la revendication 10,
**caractérisé en ce que**
une partie (3.1) du couvercle couvre la source de pression (16), et l'autre partie (3.2) couvre le contenant (17).

12. Appareil selon la revendication 10 ou 11,
**caractérisé en ce que**
le couvercle (3) ou les parties de couvercle (3.1, 3.2) entrent dans des joints à attache (19.1-19.3, 20.1-20.4) avec l'enveloppe enceinte (2).

13. Appareil selon la revendication 11 ou 12,
**caractérisé en ce que**
la partie de couvercle (3.1) associée au contenant (17) a une ouverture (18) au-dessus du contenant (17).

14. Appareil selon au moins l'une des revendications précédentes,
**caractérisé en ce que**
une fente (8), dans laquelle un tuyau flexible (40) pour distribuer un produit d'étanchéité pour pneu et/ou un câble (46) pour faire fonctionner la source de pression (16) est inséré, est prévue dans le logement (1), de préférence entre l'enveloppe enceinte (2) et le couvercle (3).

15. Appareil selon au moins l'une des revendications précédentes,
**caractérisé en ce que**
l'enveloppe enceinte (2) a un compartiment (48) pour loger un élément de connexion électrique (47).
